# EUROPÄISCHE PATENTANMELDUNG

(11) **EP 0 855 637 A1**
(43) Veröffentlichungstag der Anmeldung: **29.07.1998**
(21) Anmeldenummer: 97120075.3
(22) Anmeldetag: 17.11.1997
(51) Int. Cl.: G05D 23/19, G06F 11/32, F23N 5/20

(54) **Steuergerät für eine Heizvorrichtung**

(30) Priorität: 23.01.1997 DE 19702296
(71) Anmelder: ROBERT BOSCH GMBH, 70442 Stuttgart (DE)
(72) Erfinder: König, Markus, 73033 Göppingen (DE); Rehfuss, Herbert, 73760 Ostfildern (DE)

(57) **Zusammenfassung**

Die Erfindung betrifft ein Steuergerät, insbesondere für eine Heizvorrichtung mit einem Bedienungselemente aufweisenden Bedienfeld, wobei mindestens eines der im Bedienfeld (1) vorhandenen Bedienelemente (3,5,7,9,11,13) sowohl der Bedienung in einem Bedienungsmodus, als auch der Fehlerdiagnose und Fehlerbehebung in einem Diagnose- oder Fehlerbehebungsmodus dient.

## Beschreibung

Die Erfindung betrifft ein Steuergerät für eine Heizvorrichtung, insbesondere für einen Zentralheizungskessel, gemäß dem Oberbegriff des Hauptanspruchs.

### Stand der Technik

Steuergeräte zum Einbau in Heizvorrichtungen, insbesondere zum Einbau in Zentralheizgeräte, sind bekannt. Diese weisen zu ihrer Bedienung ein Bedienfeld auf. Auf dem Bedienfeld sind Bedienelemente zum Einstellen und/oder zum Ändern der Betriebsparameter angeordnet. Zusätzlich weisen herkömmliche Steuergeräte Elemente oder Einrichtungen auf, die der Fehlerdiagnose und -behebung dienen.

### Vorteile der Erfindung

Die Erfindung betrifft ein Steuergerät, insbesondere für eine Heizvorrichtung, besonders bevorzugt für einen Zentralheizungskessel, mit einem Bedienelemente aufweisenden Bedienfeld, wobei mindestens eines der im Bedienfeld vorhandenen Bedienelemente sowohl der Bedienung in einem Bedienungsmodus, als auch der Fehlerdiagnose oder Fehlerbehebung in einem Diagnose- oder Fehlerbehebungsmodus dient. Die Erfindung sieht also vor, daß zumindest eines der in dem Bedienfeld angeordneten Bedienelemente eine Doppelfunktion ausübt, nämlich sowohl der Bedienung als auch der Fehlerdiagnose oder -behebung dient. Dem mit der Fehlerdiagnose und der -behebung befaßten Kundendienstmonteur stehen damit zusätzliche Eingriffsmöglichkeiten am Steuergerät zur Verfügung, die eine schnellere und einfachere Fehlerdiagnose und -behebung ermöglichen. Zudem wird der Anteil an getauschten fehlerfreien Leiterplatten verringert. Ferner ergeben sich Kostenvorteile, insofern als daß ohnehin vorhandene Bedienelemente auch für die Fehlerdiagnose und die Fehlerbehebung eingesetzt werden können.

Die Erfindung betrifft in einer besonders vorteilhaften Ausführungsform ein Steuergerät der vorgenannten Art, wobei zumindest eines der im Bedienfeld angeordneten Bedienelemente ein analog arbeitendes Bedienelement, vorzugsweise ein Drehregler, besonders bevorzugt ein Drehknopf ist.

In einer besonders bevorzugten Ausführungsform betrifft die Erfindung ein vorgenanntes Steuergerät, wobei das Bedienfeld zusätzlich ein Schaltelement aufweist, das der Umschaltung des mindestens einen die Doppelfunktion aufweisenden Bedienelementes von dem Bedienungsmodus in den Fehlerdiagnose- oder Fehlerbehebungsmodus sowie umgekehrt dient.

Gemäß einer weiteren bevorzugten Ausführungsform der Erfindung betrifft die Erfindung ein vorgenanntes Steuergerät, wobei das Bedienfeld eine, vorzugsweise zweistellige, Anzeigevorrichtung aufweist. Diese zeigt gemaß einer bevorzugten Ausführungsform im Bedienungsmodus vorzugsweise die Vorlauftemperatur und im Fehlerdiagnose- oder Fehlerbehebungsmodus vorzugsweise die Nummer einer Diagnosefunktion und/oder Eingangs- oder Ausgangswerte an.

Gemäß dieser bevorzugten Ausführungsformen weist das Bedienfeld des erfindungsgemäßen Steuergerätes also eine Anzeigevorrichtung auf, ein Schaltelement zur Umschaltung vom Bedien- in den Diagnosemodus, mindestens einen Drehregler, der sowohl der Bedienung als auch der Fehlerdiagnose oder Fehlerbehebung dienen kann und gegebenenfalls weitere Bedienelemente, die nur der Bedienung des Steuergerätes dienen.

Die Erfindung sieht ferner vor, daß das Regelgerät einen dem Bedienfeld zugeordneten Schacht aufweist, der vorzugsweise zur Aufnahme von Bedienungs- und/oder Fehlerdiagnose- und Fehlerbehebungsanleitungen dient.

### Zeichnung

Die Erfindung wird anhand eines Ausführungsbeispiels näher erläutert.

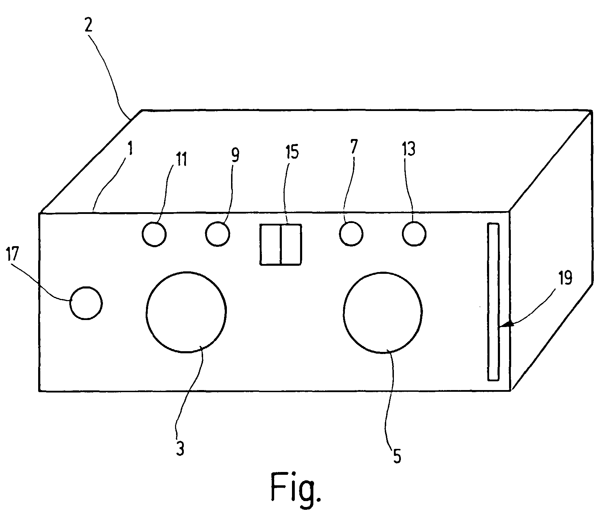

Die einzige Figur zeigt in schematischer Darstellung den Aufbau eines erfindungsgemäßen Steuergerätes.

Die Figur zeigt ein Bedienfeld 1 eines Steuergerätes 2 für einen hier nicht dargestellten Zentralheizungskessel mit einer zweistelligen Anzeige 15, einem Netzschalter 17, einem Schacht 19 zur Aufnahme von Bedienungs- oder Serviceanleitungen sowie Bedienelemente 3, 5, 7, 9, 11 und 13. Die Bedienelemente 3 und 5 sind als Drehregler bezeihungsweise Drehknöpfe ausgebildet. Der Drehknopf 3 dient im Bedienungsmodus der Einstellung der Vorlauf-Solltemperatur und im Fehlerdiagnose- und Fehlerbehebungsmodus dem Einstellen der gewünschten Diagnosefunktion. Der Drehknopf 5 dient im Bedienungsmodus der Einstellung der Brauchwasser-Solltemperatur und im Fehlerdiagnose- beziehungsweise Fehlerbehebungsmodus dem Einstellen der Eingabe- oder Ausgabewerte. Die Bedienelemente 9, 11 und 13 sind als Schalter oder Taster ausgeführt und haben nur im Bedienungsmodus Bedeutung. Der Taster 11 dient dem Ein- und Ausschalten der Schornsteinfegerbetriebsart, der Taster 9 der Entriegelung und der Taster 13 dem Ein- und Ausschalten einer Komfortfunktion. Das Bedienelement 7 ist ebenfalls als Schalter oder Taster ausgeführt und dient dem Ein- beziehungsweise Ausschalten des Fehlerdiagnose- beziehungsweise Fehlerbehebungsmodus. Die Anzeigevorrichtung 15 zeigt im Bedienungsmodus die Vorlauftemperatur an. Die Anzeige 15 zeigt im Diagnose- beziehungsweise Fehlerbehebungsmodus die Nummer der Diagnosefunktion oder die Eingangs- beziehungsweise Ausgangswerte an. Sämtliche Taster weisen eine LED auf, die bei alternativer Funktion leuchtet.

Im folgenden wird die Funktion des erfindungsgemäßen Steuergerätes näher beschrieben.

Ausgehend vom üblicherweise ablaufenden Bedienungsmodus, wird der Fehlerdiagnose- beziehungsweise Fehlerbehebungsmodus durch Drücken des Tasters 7 aktiviert. Das Steuergerät tritt damit in den Fehlerdiagnose- beziehungsweise Fehlerbehebungsmodus ein, in dem Sensor- und Aktor-Werte abgerufen werden können und der zum Einstellen von Vorgabewerten (zum Beispiel Taktsperre, Pumpenschaltart) sowie zum Anzeigen einer gespeicherten Fehlermeldung dient. Auch bei aktivem Fehlerdiagnose- beziehungsweise Fehlerbehebungsmodus arbeitet das Steuergerät normal weiter. Es kann vorgesehen sein, daß ohne Veränderung des Modus der Fehlerdiagnose- beziehungsweise Fehlerbehebungsmodus selbständig nach einer vorgebbaren Zeit, zum Beispiel 15 min, wieder verlassen wird. Der Taster 7 dient nicht nur zum Starten und Beenden des Fehlerdiagnose- beziehungsweise Fehlerbehebungsmodus, sondern auch zum Abspeichern von geänderten Werten nach deren Einstellung. Zudem wird durch gekoppelte Betätigung des Schalters 17 und des Schalters 7 ein Rücksetzen der Einstellwerte in den Auslieferzustand des Steuergeräts vorgenommen. Die Anzeige 15 zeigt im Fehlerdiagnose- beziehungsweise Fehlerbehebungsmodus die aufgrund der aktuellen Stellung des Drehknopfes 3 gewählte Diagnosefunktion an. Durch Drehen des Drehknopfes 3 kann die gewünschte Diagnosefunktion eingestellt werden, die dann auf der Anzeigevorrichtung 15 dargestellt wird. Es kann vorgesehen sein, daß nach einer bestimmten Zeit, zum Beispiel 5 Sekunden, ohne Drehung am Drehknopf 3 die Anzeige zum Ausgabewert entsprechend der gewählten Diagnosefunktion wechselt. Durch Drehen am Drehknopf 5 kann bei bestimmten Diagnosefunktionen der Ausgabewert eingestellt werden. Der Drehknopf 5 dient auch dazu, eine gespeicherte Fehlermeldung zu löschen.

Als Diagnosefunktionen in Form von Analogeingängen kann vorgesehen sein, gespeicherte Fehler- und Statusmeldungen abzurufen, die Temperatur der Temperatursensoren anzuzeigen, weitere Signale der freien Analogeingänge anzuzeigen, den Raumreglereingang anzuzeigen, den Wasserschaltereingang anzuzeigen, Kodiereingänge anzuzeigen, den Betriebsartschalter anzuzeigen, die minimale oder maximale Heizleistung anzuzeigen, die Lüfterstufe anzuzeigen, die Pumpenschaltart, die Taktsperre oder den Kondensatschutz anzuzeigen, die Außentemperatur, die Modulkennzahlen, minimale Hysterese im Heizbetrieb, das Regelventil, die Leistung, die Drehzahl, Software-Versionsnummer oder die maximale Speicherleistung anzuzeigen. Bei den Funktionen Taktsperre, Betriebsartschalter, Lüfterstufe, Pumpenschaltart, minimale Hysterese im Heizbetrieb oder maximale Speicherleistung kann mittels des Drehknopfes 5 der Eingabewert eingestellt werden.

Nach Eingabe der Werte mit dem Drehknopf 5 kann der Eingabewert durch Betätigen des Tasters 7 gespeichert werden oder durch Drehen des Drehknopfes 3 verworfen werden. Mittels des Tasters 7 kann der Fehlerdiagnose- beziehungsweise Fehlerbehebungsmodus beendet werden. Alternativ kann vorgesehen sein, durch Drehen des Drehknopfes 3 weitere Diagnosefunktionen anzuwählen, die eine Dauerzündung auslösen oder die Aktoren (Pumpe, Lüfter, Regelventil) direkt beeinflussen, wobei bei diesen Ausgabefunktionen die normale Brennerfunktion gesperrt werden kann.

Es ist erfindungsgemäß auch vorgesehen, die Anzeige der Diagnosefunktion in der Anzeigevorrichtung 15 mit einem zwischen den beiden angezeigten Ziffern angeordneten Punkt zu kennzeichnen, so daß der Anzeige unmittelbar entnommen werden kann, ob das Gerät im Bedienungsmodus oder im Fehlerdiagnose- beziehungsweise Fehlerbehebungsmodus betrieben wird.

## Patentansprüche

1. Steuergerät, insbesondere für eine Heizvorrichtung, mit einem Bedienungselemente aufweisenden Bedienfeld, **dadurch gekennzeichnet**, daß mindestens eines der im Bedienfeld (1) vorhandenen Bedienelemente (3,5,7,9,11,13) sowohl der Bedienung in einem Bedienungsmodus, als auch der Fehlerdiagnose oder Fehlerbehebung in einem Diagnose- oder Fehlerbehebungsmodus dient.

2. Steuergerät nach Anspruch 1, **dadurch gekennzeichnet**, daß mindestens eines der Bedienelemente (3,5,7,9,11,13) ein Drehregler, insbesondere ein Drehknopf (3,5) ist.

3. Steuergerät nach einem der vorhergehenden Ansprüche, **dadurch gekennzeichnet**, daß mindestens einer der Drehregler (3,5) sowohl der Bedienung als auch der Fehlerdiagnose oder Fehlerbehebung dient.

4. Steuergerät nach einem der vorhergehenden Ansprüche, **dadurch gekennzeichnet**, daß das Bedienfeld (1) ein Schaltelement (7) aufweist, das die Umschaltung des mindestens einen Bedienelementes (3,5) von dem Bedienungsmodus in den Fehlerdiagnose- oder Fehlerbehebungsmodus dient.

5. Steuergerät nach einem der vorhergehenden Ansprüche, **dadurch gekennzeichnet**, daß das Bedienfeld (1) eine Anzeigevorrichtung (15) aufweist, die im Bedienungsmodus vorzugsweise eine Vorlauftemperatur und im Diagnose- oder Fehlerbehebungsmodus vorzugsweise eine Diagnosefunktionsnummer oder Eingangs-/Ausgangswerte anzeigt.

6. Steuergerät nach einem der vorhergehenden Ansprüche, **dadurch gekennzeichnet**, daß das Steuergerät einen dem Bedienfeld (1) zugeordneten Schacht (19), insbesondere zur Aufnahme von Bedienungs- und Diagnoseanleitungen aufweist.
